(19) Europäisches Patentamt / European Patent Office / Office européen des brevets

(11) **EP 3 472 239 B1**

(12) **EUROPEAN PATENT SPECIFICATION**

(45) Date of publication and mention
of the grant of the patent:
**13.05.2020 Bulletin 2020/20**

(21) Application number: **17728237.3**

(22) Date of filing: **12.06.2017**

(51) Int Cl.:
*C08L 23/08* (2006.01)    *C08F 2/00* (2006.01)
*C08F 210/16* (2006.01)   *C08F 210/08* (2006.01)
*C08F 210/14* (2006.01)   *C08F 4/659* (2006.01)

(86) International application number:
**PCT/EP2017/064264**

(87) International publication number:
**WO 2017/216096 (21.12.2017 Gazette 2017/51)**

(54) **BI- OR MULTIMODAL POLYETHYLENE WITH LOW UNSATURATION LEVEL**

BI- ODER MULTIMODALES POLYETHYLEN MIT NIEDRIGEM UNGESÄTTIGTHEITSGRAD

POLYÉTHYLÈNE BI- OU MULTIMODAL À FAIBLE NIVEAU D'INSATURATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **17.06.2016 EP 16174989**

(43) Date of publication of application:
**24.04.2019 Bulletin 2019/17**

(73) Proprietor: **Borealis AG**
**1220 Vienna (AT)**

(72) Inventor: **GALGALI, Girish Suresh**
**4021 Linz (AT)**

(74) Representative: **Dehns**
**St. Bride's House**
**10 Salisbury Square**
**London EC4Y 8JD (GB)**

(56) References cited:
**WO-A1-2013/007619     WO-A1-2016/083208
US-A1- 2006 177 675**

## Description

The present invention relates to a new bi- or multimodal polyethylene terpolymer made with a metallocene catalyst having a narrow molecular weight distribution and a low unsaturation level.

Single site catalysts such as metallocenes have received wide attention for their ability to make polyethylene having relatively narrow molecular weight distribution at excellent polymerization rates.

Unimodal polyethylene (PE) polymers made with such catalysts are usually used for film applications. Unimodal PE polymers have for instance good optical properties, like low haze, but for instance the melt processing of such polymers is not satisfactory in production point of view and may cause quality problems of the final product as well.

Multimodal PE polymers with two or more different polymer components are better to process, but e.g. melt homogenisation of the multimodal PE may be problematic resulting to inhomogeneous final product evidenced e.g. with high gel content of the final product. Another way to improve the processability of an ethylene polymer while maintaining a narrow molecular weight distribution, long chain branching may be incorporated into the polymer. However, long chain branch structures sometimes promote directional orientation during fabrication leading to an imbalance in mechanical properties and reduced impact and tear resistance. The clarity of fabricated articles such as blown film may also be less than optimum for long chain branched ethylene polymers even with narrow molecular weight distributions.

A further property, which influences the quality of the polyethylene, and thus the quality of the final article, is the level of unsaturation.

It is desired to have low unsaturation levels in polymer backbone which in turn governs properties like lower organoleptics, long term weatherability etc..

From EP 1969022 polyethylenes comprising a low molecular weight (LMW) component and a high molecular weight (HMW) component are known, which are characterized by a Rv value of from 0.3 to 2.0. Rv shows the unsaturation level of a polymer and is defined as indicated below:

$$R_v = \frac{[vinyl]}{[vinyl] + [vinylidene] + [cis] + [trans]}$$

wherein [vinyl] is the concentration of vinyl groups in the isolated polymer in vinyl/1000 carbon atoms; [vinylidene], [cis] and [trans] are the concentration of vinylidene, cis and trans vinylene groups in the isolated polymer in amount per 1000 carbon atoms, respectively.

Thus the bimodal polyethylenes of EP 1969022 have a quite high unsaturation level.

Such bimodal polyethylenes are suitable for being used in e.g. waxes, lubricants, hot melt adhesives or additives.

WO2016/083208 describes multimodal ethylene polymer compositions and their use in film applications. WO2013007619 relates to a metallocene-catalysed polyethylene resin having a multimodal molecular weight distribution. US2006/177675 describes an extrusion coated substrate having a coating comprising a polyethylene produced by a single site catalyst and comprising ethylene and at least two C4-C12 alpha-olefins.

Thus there is a continuous need to find multimodal PE polymers having a narrow molecular weight distribution and a low unsaturation level.

## Summary of the invention

The object of the present invention is therefore to provide a new bi- or multimodal polyethylene with a narrow molecular weight distribution and a low unsaturation level.

The present invention is therefore directed to bi- or multimodal polyethylene being a terpolymer of ethylene and two different comonomers selected from alpha olefins having from 4 to 10 carbon atoms and being produced with a metallocene catalyst,

wherein the bi- or multimodal polyethylene terpolymer has

    (a) an MFR$_2$ of 2.0-5.0 g/10 min (according to ISO 1133 at 190°C under 2.16 kg load),
    (b) an MWD (Mw/Mn) of 5 or less
    (c) a density of 915 to 930 kg/m$^3$ (according to ISO 1183)
    (d) an unsaturation level Rv of below 0.40 and being defined as

$$Rv = \frac{[vinyl]}{[vinylidene] + [vinyl] + [cis] + [trans] + [tris]}$$

wherein [vinyl] is the concentration of vinyl groups in the isolated polymer in vinyl/1000 carbon atoms; [vinylidene], [cis], [trans] and [tris] are the concentration of vinylidene, cis and trans vinylene groups and of tri-substituted vinylene groups in the isolated polymer in an amount per 1000 carbon atoms, respectively, as detected by the NMR method described in the experimental part,

and wherein the bi- or multimodal polyethylene terpolymer comprises at least

(i) an ethylene polymer component (A) having an $MFR_2$ of at least 50 g/10 min up to 100 g/10 min (according to ISO 1133 at 190°C under 2.16 kg load) and

(ii) an ethylene polymer component (B) having an $MFR_2$ of 0.5 to 10.0 g/10 min (according to ISO 1133 at 190°C under 2.16 kg load).

In a further embodiment the invention is related to the use of the new bi- or multimodal polyethylene terpolymer in film applications, like blown film or cast film applications, preferably cast film applications.

In yet a further embodiment the invention is related to a blown or cast film, preferably cast film, comprising the new bi- or multimodal polyethylene terpolymer.

## Detailed description of the invention

The term "bi- or multimodal" in context of bi- or multimodal polyethylene terpolymer means herein multimodality with respect to melt flow rate (MFR) of the ethylene polymer components (A) and (B), i.e. the ethylene polymer components (A) and (B) have different MFR values. The multimodal polyethylene terpolymer can have further multimodality with respect to one or more further properties between the ethylene polymer components (A) and (B), as will be described later below.

As already mentioned above, the polyethylene terpolymer is referred herein as "bi- or multimodal", since the ethylene polymer component (A) and the ethylene polymer component (B) have been produced under different polymerization conditions resulting in different Melt Flow Rates (MFR, e.g. $MFR_2$). I.e. the polyethylene is bi- or multimodal at least with respect to difference in MFR of the two ethylene polymer components (A) and (B).

The ethylene polymer component (A) has an $MFR_2$ of at least 50 g/10 min up to 100 g/10 min, preferably of 50 to 80 g/10 min and more preferably of 55 to 70 g/10 min.

The ethylene polymer component (B) has an $MFR_2$ of 0.5 to 10 g/10 min, preferably of 1.0 to 7.0 g/10 min and more preferably of 2.0 to 5.0 g/10 min.

If the $MFR_2$ of ethylene polymer components, e.g. component (B), cannot be measured, because it cannot be isolated from the mixture of at least ethylene polymer components (A) or (B), then it can be calculated ($MI_2$ below) using so called Hagström equation (Hagström, The Polymer Processing Society, Europe/Africa Region Meeting, Gothenburg, Sweden, August 19-21, 1997):

$$MI_b = \left( w \cdot MI_1^{\frac{w^{-b}}{a}} + (1 - w) \cdot MI_2^{\frac{w^{-b}}{a}} \right)^{-a \cdot w^b} \quad (eq.\,3)$$

According to said Hagström, in said equation (eq.3), a=5.2 and b=0.7 for $MFR_2$. Furthermore, w is the weight fraction of the other ethylene polymer component, e.g. component (A), having higher MFR. The ethylene polymer component (A) can thus be taken as the component 1 and the ethylene polymer component (B) as the component 2. $MI_b$ is the $MFR_2$ of the final polyethylene.

The $MFR_2$ of the ethylene polymer component (B) ($MI_2$) can then be solved from the equation when the MFR of the ethylene polymer component (A) ($MI_1$) and the final polyethylene ($MI_b$) are known.

The two alpha-olefin comonomers having from 4 to 10 carbon atoms of the polyethylene are preferably 1-butene and 1-hexene.

In addition to multimodality with respect to, i.e. difference between, the MFR of the ethylene polymer components (A) and (B), the polyethylene terpolymer of the invention can also be bi-or multimodal e.g. with respect to one or both of the two further properties:

➤ Bi- or multimodality with respect to, i.e. difference between, the comonomer type or the comonomer content(s) present in the ethylene polymer components (A) and (B), or both the type and content(s) of comonomers present in the ethylene polymer components (A) and (B); and/or

➤ the density of the ethylene polymer components (A) and (B).

Preferably, the bi-or multimodal polyethylene terpolymer is further bi- or multimodal with respect to comonomer type and/or comonomer content (mol%), preferably wherein the alpha-olefin comonomer having from 4 to 10 carbon atoms of ethylene polymer component (A) is different from the alpha-olefin comonomer having from 4 to 10 carbon atoms of ethylene polymer component (B), preferably wherein the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

Preferably, the ethylene polymer component (A) has lower amount (mol%) of comonomer than the ethylene polymer component (B), whereby the amount of comonomer, preferably of 1-butene in the ethylene polymer component (A) is from 0.1 to 2.5 mol% more preferably from 0.5 to 2.0 mol%.

The comonomer content of component (A) and (B) can be measured, or, in case, and preferably, one of the components is produced first and the other thereafter in the presence of the first produced in a so called multistage process, then the comonomer content of the first produced component, e.g. component (A), can be measured and the comonomer content of the other component, e.g. component (B), can be calculated according to following formula:

Comonomer content (mol%) in component B = (comonomer content (mol%) in final product – (weight fraction of component A*comonomer content (mol%) in component A)) / (weight fraction of component B)

More preferably, the total amount of comonomers present in the bi- or multimodal polyethylene terpolymer is of 1.5 to 8.0 mol%, preferably of 1.6 to 7.0 mol% and more preferably of 1.8 to 5.5 mol%.

In addition it is further preferred that the bi- or multimodal polyethylene terpolymer is further bi- or multimodal with respect to a difference in density between the ethylene polymer component (A) and ethylene polymer component (B). Preferably, the density of ethylene polymer component (A) is higher, than the density of the ethylene polymer component (B). More preferably the density of the ethylene polymer component (A) is of 930 to 950, preferably of 935 to 945 kg/m$^3$.

The bi- or multimodal polyethylene terpolymer is preferably a linear low density polyethylene (LLDPE), which has a well-known meaning. Even more preferably the density of the bi- or multimodal polyethylene terpolymer is of 915 to 930, preferably of 916 to 928 kg/m$^3$.

Additionally, the polyethylene terpolymer can also be multimodal with respect to, i.e. have difference between, the (weight average) molecular weight of the ethylene polymer components (A) and (B). The multimodality re weight average molecular weight means that the form of the molecular weight distribution curve, i.e. the appearance of the graph of the polymer weight fraction as function of its molecular weight, of such a bi- or multimodal polyethylene will show two or more maxima or at least be distinctly broadened in comparison with the curves for the individual components.

The molecular weight distribution (MWD, Mw/Mn) of the polyethylene terpolymer of the present invention is 5 or less, preferably it is in a range of 2.0 to 5.0, preferably in a range of 2.2 to 4.8 and more preferably in a range of 2.4 to 4.6.

Preferably, the bi- or multimodal polyethylene terpolymer comprises the ethylene polymer component (A) in an amount of 30 to 70 wt%, more preferably of 35 to 60 wt%, and still more preferably of 40 to 45 wt%, and the ethylene polymer component (B) in an amount of 70 to 30, more preferably of 65 to 40, and still more preferably of 60 to 55 wt%. Most preferably, the polyethylene terpolymer consists of the ethylene polymer components (A) and (B) as the sole polymer components.

The bi- or multimodal polyethylene terpolymer of the present invention is further defined by its unsaturation level Rv.

The unsaturation level Rv of the bi- or multimodal polyethylene terpolymer of the present invention is below 0.40, preferably below 0.35 and more preferably below 0.30.

Rv is defined as

$$Rv = \frac{[vinyl]}{[vinylidene]+[vinyl]+[cis]+[trans]+[tris]}$$

wherein [vinyl] is the concentration of vinyl groups in the isolated polymer in vinyl/1000 carbon atoms; [vinylidene], [cis], [trans] and [tris] are the concentration of vinylidene, cis and trans vinylene groups and of tri-substituted vinylene groups in the isolated polymer in an amount per 1000 carbon atoms, respectively, as detected by the NMR method described in the experimental part.

The bi- or multimodal polyethylene terpolymer may contain further polymer components and optionally additives and/or fillers. It is noted herein that additives may be present in the polyethylene terpolymer and/or mixed with the polyethylene e.g. in a compounding step for producing a polymer composition comprising the bi- or multimodal polyethylene terpolymer and optional further polymer components additives and/or fillers.

The optional additives and fillers and the used amounts thereof are conventional in the field of film applications. Examples of such additives are, among others, antioxidants, process stabilizers, UV-stabilizers, pigments, fillers, antistatic additives, antiblock agents, nucleating agents as well as acid scavengers.

It is understood herein that any of the additives and/or fillers can optionally be added in so called master batch which comprises the respective additive(s) together with a carrier polymer. In such a case the carrier polymer is not calculated to the polymer components of the polymer composition, but to the amount of the respective additive(s), based on the total amount of polymer composition (100 wt%).

Thus in a further embodiment the invention is related to a polymer composition comprising the bi-or multimodal polyethylene terpolymer as defined above and optional further polymer components additives and/or fillers.

Preferably the polymer composition comprises at least 80 wt% of the polyethylene terpolymer based on the total amount (100 wt%) of the polymer composition and optionally, and preferably, additives.

More preferably, the polymer composition comprises the polyethylene terpolymer of the present invention as the sole polymeric component(s) and preferably additives. More preferably, the polymer composition consists of the polyethylene and additive(s).

It is noted herein, that the polyethylene may optionally comprise a prepolymer component in an amount up to 20 wt% which has a well-known meaning in the art. In such case the prepolymer component is calculated in one of the ethylene polymer components (A) or (B), preferably in an amount of the ethylene polymer component (A), based on the total amount of the polyethylene terpolymer.

The bi- or multimodal polyethylene terpolymer is produced using a metallocene catalyst. More preferably, the ethylene polymer components (A) and (B) of the polyethylene terpolymer are preferably produced using a metallocene catalyst, which term has a well-known meaning in the art. The term "metallocene catalyst" means herein the catalytically active metallocene compound or complex combined with a cocatalyst. The metallocene compound or complex is referred herein also as organometallic compound (C).

The organometallic compound (C) comprises a transition metal (M) of Group 3 to 10 of the Periodic Table (IUPAC 2007) or of an actinide or lanthanide.

The term "an organometallic compound (C)" in accordance with the present invention includes any metallocene compound of a transition metal which bears at least one organic (coordination) ligand and exhibits the catalytic activity alone or together with a cocatalyst. The transition metal compounds are well known in the art and the present invention covers compounds of metals from Group 3 to 10, e.g. Group 3 to 7, or 3 to 6, such as Group 4 to 6 of the Periodic Table, (IUPAC 2007), as well lanthanides or actinides.

In an embodiment the organometallic compound (C) has the following formula (I):

$$(L)_m R_n M X_q \qquad (I)$$

wherein

"M" is a transition metal (M) transition metal (M) of Group 3 to 10 of the Periodic Table (IUPAC 2007),
each "X" is independently a monoanionic ligand, such as a $\sigma$-ligand,
each "L" is independently an organic ligand which coordinates to the transition metal "M",
"R" is a bridging group linking said organic ligands (L),
"m" is 1, 2 or 3, preferably 2,
"n" is 0, 1 or 2, preferably 1,
"q" is 1, 2 or 3, preferably 2 and
m+q is equal to the valency of the transition metal (M).
"M" is preferably selected from the group consisting of zirconium (Zr), hafnium (Hf), or titanium (Ti), more preferably selected from the group consisting of zirconium (Zr) and hafnium (Hf).
"X" is preferably a halogen, most preferably Cl.

Most preferably the organometallic compound (C) is a metallocene complex which comprises a transition metal compound, as defined above, which contains a cyclopentadienyl, indenyl or fluorenyl ligand as the substituent "L". Further, the ligands "L" may have substituents, such as alkyl groups, aryl groups, arylalkyl groups, alkylaryl groups, silyl groups, siloxy groups, alkoxy groups or other heteroatom groups or the like. Suitable metallocene catalysts are known in the art and are disclosed, among others, in WO-A-95/12622, WO-A-96/32423, WO-A-97/28170, WO-A-98/32776, WO-A-99/61489, WO-A-03/010208, WO-A-03/051934, WO A-03/051514, WO-A-2004/085499, EP-A-1752462 and EP-A-1739103.

Most preferred the metallocene catalyst, which means the catalytically active metallocene complex, as defined above, is used together with a cocatalyst, which is also known as an activator. Suitable activators are metal alkyl compounds and especially aluminium alkyl compounds known in the art. Especially suitable activators used with metallocene catalysts are alkylaluminium oxy-compounds, such as methylalumoxane (MAO), tetraisobutylalumoxane (TIBAO) or hexaisobutylalumoxane (HIBAO).

More preferably the ethylene polymer components (A) and (B) of the bi- or multimodal polyethylene terpolymer are produced in the presence of the same metallocene catalyst.

The bi- or multimodal polyethylene terpolymer may be produced in any suitable polymerization process known in the art, which comprise at least one polymerization stage, where polymerization is typically carried out in solution, slurry, bulk or gas phase. Preferably the bi- or multimodal polyethylene terpolymer is produced in a multi-stage polymerization process comprising at least two polymerization zones.

The ethylene polymer component (A) is preferably produced in a first polymerization zone and the ethylene polymer component (B) is preferably produced in a second polymerization zone. The first polymerization zone and the second polymerization zone may be connected in any order, i.e. the first polymerization zone may precede the second polymerization zone, or the second polymerization zone may precede the first polymerization zone or, alternatively, polymerization zones may be connected in parallel. However, it is preferred to operate the polymerization zones in cascaded mode. The polymerization zones may operate in slurry, solution, or gas phase conditions or their combinations.

Suitable processes comprising cascaded slurry and gas phase polymerization stages are disclosed, among others, in WO-A-92/12182 and WO-A-96/18662.

It is often preferred to remove the reactants of the preceding polymerization stage from the polymer before introducing it into the subsequent polymerization stage. This is preferably done when transferring the polymer from one polymerization stage to another.

The catalyst may be transferred into the polymerization zone by any means known in the art. For example, it is possible to suspend the catalyst in a diluent and maintain it as homogeneous slurry, to mix the catalyst with a viscous mixture of grease and oil and feed the resultant paste into the polymerization zone or to let the catalyst settle and introduce portions of thus obtained catalyst mud into the polymerization zone.

The polymerization, preferably of the ethylene polymer component (A), in the first polymerization zone is preferably conducted in slurry. Then the polymer particles formed in the polymerization, together with the catalyst fragmented and dispersed within the particles, are suspended in the fluid hydrocarbon. The slurry is agitated to enable the transfer of reactants from the fluid into the particles.

The polymerization usually takes place in an inert diluent, typically a hydrocarbon diluent such as methane, ethane, propane, n-butane, isobutane, pentanes, hexanes, heptanes, octanes etc., or their mixtures. Preferably the diluent is a low-boiling hydrocarbon having from 1 to 4 carbon atoms or a mixture of such hydrocarbons and preferred diluent is propane.

The ethylene content in the fluid phase of the slurry may be from 2 to about 50 % by mol, preferably from about 2 to about 20 % by mol and in particular from about 3 to about 12 % by mol.

The temperature in the slurry polymerization is typically from 50 to 115°C, preferably from 60 to 110°C and in particular from 70 to 100°C. The pressure is from 1 to 150 bar, preferably from 10 to 100 bar.

The slurry polymerization may be conducted in any known reactor used for slurry polymerization.

Such reactors include a continuous stirred tank reactor and a loop reactor. It is especially preferred to conduct the polymerization in loop reactor. In such reactors the slurry is circulated with a high velocity along a closed pipe by using a circulation pump. Loop reactors are generally known in the art and examples are given, for instance, in US-A-4582816, US-A-3405109, US-A-3324093, EP-A-479186 and US-A-5391654.

It is sometimes advantageous to conduct the slurry polymerization above the critical temperature and pressure of the fluid mixture. Such operation is described in US-A-5391654. In such operation the temperature is typically from 85 to 110°C, preferably from 90 to 105°C and the pressure is from 30 to 150 bar, preferably from 50 to 100 bar.

The slurry may be withdrawn from the reactor either continuously or intermittently. A preferred way of intermittent withdrawal is the use of settling legs where slurry is allowed to concentrate before withdrawing a batch of the concentrated slurry from the reactor. The continuous withdrawal is advantageously combined with a suitable concentration method, e.g. as disclosed in EP-A-1310295 and EP-A-1591460.

Hydrogen may be fed into the reactor to control the molecular weight of the polymer as known in the art. Furthermore, one or more alpha-olefin comonomers are added into the reactor e.g. to control the density of the polymer product. The actual amount of such hydrogen and comonomer feeds depends on the catalyst that is used and the desired melt index (or molecular weight) and density (or comonomer content) of the resulting polymer. The polymerization of the ethylene polymer component (B), in the second polymerization zone is preferably conducted in gas phase, preferably in a fluidized bed reactor, in a fast fluidized bed reactor or in a settled bed reactor or in any combination of these. The polymerization in the second polymerization zone is more preferably conducted in a fluidized bed gas phase reactor, wherein ethylene is polymerized together with at least one comonomer in the presence of a polymerization catalyst and, preferably in the presence of the reaction mixture from the first polymerization zone comprising the ethylene polymer component (A) in an upwards moving gas stream. The reactor typically contains a fluidized bed comprising the growing polymer particles containing the active catalyst located above a fluidization grid.

The polymer bed is fluidized with the help of the fluidization gas comprising the olefin monomer, eventual comonomer(s), eventual chain growth controllers or chain transfer agents, such as hydrogen, and eventual inert gas. The fluidization gas is introduced into an inlet chamber at the bottom of the reactor. One or more of the above-mentioned components may be continuously added into the fluidization gas to compensate for losses caused, among other, by reaction or product withdrawal.

The fluidization gas passes through the fluidized bed. The superficial velocity of the fluidization gas must be higher that minimum fluidization velocity of the particles contained in the fluidized bed, as otherwise no fluidization would occur. On the other hand, the velocity of the gas should be lower than the onset velocity of pneumatic transport, as otherwise the whole bed would be entrained with the fluidization gas.

When the fluidization gas is contacted with the bed containing the active catalyst the reactive components of the gas, such as monomers and chain transfer agents, react in the presence of the catalyst to produce the polymer product. At the same time the gas is heated by the reaction heat.

The unreacted fluidization gas is removed from the top of the reactor and cooled in a heat exchanger to remove the heat of reaction. The gas is cooled to a temperature which is lower than that of the bed to prevent the bed from heating because of the reaction. It is possible to cool the gas to a temperature where a part of it condenses. When the liquid droplets enter the reaction zone they are vaporised.

The vaporisation heat then contributes to the removal of the reaction heat. This kind of operation is called condensed mode and variations of it are disclosed, among others, in WO-A-2007/025640, USA-4543399, EP-A-699213 and WO-A-94/25495. It is also possible to add condensing agents into the recycle gas stream, as disclosed in EP-A-696293. The condensing agents are non-polymerizable components, such as n-pentane, isopentane, n-butane or isobutane, which are at least partially condensed in the cooler.

The gas is then compressed and recycled into the inlet chamber of the reactor. Prior to the entry into the reactor fresh reactants are introduced into the fluidization gas stream to compensate for the losses caused by the reaction and product withdrawal. It is generally known to analyze the composition of the fluidization gas and introduce the gas components to keep the composition constant. The actual composition is determined by the desired properties of the product and the catalyst used in the polymerization.

The catalyst may be introduced into the reactor in various ways, either continuously or intermittently. Where the gas phase reactor is a part of a reactor cascade the catalyst is usually dispersed within the polymer particles from the preceding polymerization stage. The polymer particles may be introduced into the gas phase reactor as disclosed in EP-A-1415999 and WO-A-00/26258. Especially if the preceding reactor is a slurry reactor it is advantageous to feed the slurry directly into the fluidized bed of the gas phase reactor as disclosed in EP-A-887379, EP-A-887380, EP-A-887381 and EP-A-991684.

The polymeric product may be withdrawn from the gas phase reactor either continuously or intermittently. Combinations of these methods may also be used. Continuous withdrawal is disclosed, among others, in WO-A-00/29452. Intermittent withdrawal is disclosed, among others, in US-A-4621952, EP-A-188125, EP-A-250169 and EP-A-579426.

Also antistatic agent(s), such as water, ketones, aldehydes and alcohols, may be introduced into the gas phase reactor if needed. The reactor may also include a mechanical agitator to further facilitate mixing within the fluidized bed.

Typically the fluidized bed polymerization reactor is operated at a temperature within the range of from 50 to 100°C, preferably from 65 to 90°C. The pressure is suitably from 10 to 40 bar, preferably from 15 to 30 bar.

The polymerization of the at least ethylene polymer component (A) and ethylene polymer component (B) in the first and second polymerization zones may be preceded by a prepolymerization step. The purpose of the prepolymerization is to polymerize a small amount of polymer onto the catalyst at a low temperature and/or a low monomer concentration. By prepolymerization it is possible to improve the performance of the catalyst in slurry and/or modify the properties of the final polymer.

The prepolymerization step may be conducted in slurry or in gas phase. Preferably prepolymerization is conducted in slurry, preferably in a loop reactor. The prepolymerization is then preferably conducted in an inert diluent, preferably the diluent is a low-boiling hydrocarbon having from 1 to 4 carbon atoms or a mixture of such hydrocarbons.

The temperature in the prepolymerization step is typically from 0 to 90°C, preferably from 20 to 80°C and more preferably from 40 to 70°C.

The pressure is not critical and is typically from 1 to 150 bar, preferably from 10 to 100 bar. The catalyst components are preferably all introduced to the prepolymerization step. Preferably the reaction product of the prepolymerization step is then introduced to the first polymerization zone.

Also preferably, as mentioned above, the prepolymer component is calculated to the amount of the ethylene polymer component (A).

It is within the knowledge of a skilled person to adapt the polymerization conditions in each step as well as feed streams and resident times to obtain the claimed bi- or multimodal polyethylene terpolymer.

The bi- or multimodal polyethylene terpolymer comprising at least, and preferably solely, the ethylene polymer components (A) and (B) obtained from the second polymerization zone, which is preferably a gas phase reactor as described above, is the subjected to conventional post reactor treatment to remove i.a. the unreacted components.

Thereafter, typically, the obtained polymer is extruded and pelletized. The extrusion may be conducted in the manner generally known in the art, preferably in a twin screw extruder. One example of suitable twin screw extruders is a co-rotating twin screw extruder. Those are manufactured, among others, by Copernion or Japan Steel Works. Another example is a counter rotating twin screw extruder. Such extruders are manufactured, among others, by Kobe Steel and Japan Steel Works. Before the extrusion at least part of the desired additives, as mentioned above, are preferably mixed with the polymer. The extruders typically include a melting section where the polymer is melted and a mixing section where the polymer melt is homogenised. Melting and homogenisation are achieved by introducing energy into the polymer. Suitable level of specific energy input (SEI) is from about 150 to about 450 kWh/ton polymer, preferably from 175 to 350 kWh/ton.

**Film of the invention**

The film of the invention comprises at least one layer comprising the polymer composition. The film can be a monolayer film comprising the polymer composition or a multilayer film, wherein at least one layer comprises the polymer composition. The terms "monolayer film" and "multilayer film" have well known meanings in the art.

The layer of the monolayer or multilayer film of the invention may consist of the polymer composition, comprising the bi- or multimodal polyethylene terpolymer and optional additives, as such or of a blend of the polymer composition together with further polymer(s). In case of blends, any further polymer is different from the bi- or multimodal polyethylene terpolymer and is preferably a polyolefin. Part of the above mentioned additives can optionally be added to the polymer composition during the film preparation process.

Preferably, the at least one layer of the invention comprises at least 50 wt%, preferably at least 60 wt%, preferably at least 70 wt%, more preferably at least 80 wt%, of the polymer composition of the invention. More preferably said at least one layer of the film of invention consists of the polymer composition.

Accordingly, the films of the present invention may comprise a single layer (i.e. monolayer) or may be multi-layered. Multilayer films typically, and preferably, comprise at least 3 layers.

The films are preferably produced by any conventional film extrusion procedure known in the art including cast film and blown film extrusion. More preferably, the film is a blown or cast film; most preferably the film is a cast film. Conventional film production techniques may be used in this regard. If the blown or cast film is a multilayer film, then the various layers are typically coextruded. The skilled man will be aware of suitable extrusion conditions.

The resulting films may have any thickness conventional in the art. The thickness of the film is not critical and depends on the end use. Thus, films may have a thickness of, for example, 300 $\mu$m or less, typically 6 to 200 $\mu$m, preferably 10 to 180 $\mu$m, e.g. 20 to 150 $\mu$m or 20 to 120 $\mu$m. If desired, the polyethylene of the invention enables thicknesses of less than 100 $\mu$m, e.g. less than 50 $\mu$m. Films of the invention with thickness even less than 20 $\mu$m can also be produced whilst maintaining good mechanical properties.

**Experimental Part:**

**A) Determination methods**

**Melt Flow Rate**

The melt flow rate (MFR) is determined according to ISO 1133 and is indicated in g/10 min. The MFR is an indication of the flowability, and hence the processability, of the polymer. The higher the melt flow rate, the lower the viscosity of the polymer. The MFR is determined at 190°C for polyethylene. MFR may be determined at different loadings such as 2.16 kg ($MFR_2$), 5 kg ($MFR_5$) or 21.6 kg ($MFR_{21}$).

**Calculated MFR of GPR-product**

The MFR of the gas phase reactor product can be calculated ($MI_2$ below) using so called Hagström equation (Hagström, The Polymer Processing Society, Europe/Africa Region Meeting, Gothenburg, Sweden, August 19-21, 1997):

$$MI_b = \left( w \cdot MI_1^{-\frac{w^{-b}}{a}} + (1-w) \cdot MI_2^{\frac{w^{-b}}{a}} \right)^{-a \cdot w^b} \quad (eq.3)$$

According to said Hagström, in said equation (eq.3), a=5.2 and b=0.7 for $MFR_2$. Furthermore, w is the weight fraction of the other ethylene polymer component, e.g. component (A), having higher MFR. The ethylene polymer component (A) can thus be taken as the component 1 and the ethylene polymer component (B) as the component 2. $MI_b$ is the $MFR_2$ of the final polyethylene.
The $MFR_2$ of the ethylene polymer component (B) ($MI_2$) can then be solved from the equation when the MFR of the ethylene polymer component (A) ($MI_1$) and the final polyethylene ($MI_b$) are known.

**Density**

Density of the polymer was measured according to ASTM; D792, Method B (density by balance at 23°C) on compression moulded specimen prepared according to EN ISO 1872-2 (February 2007) and is given in $kg/m^3$.

**Molecular weights, molecular weight distribution (Mn, Mw, MWD) - GPC**

A PL 220 (Agilent) GPC equipped with a refractive index (RI), an online four capillary bridge viscometer (PL-BV 400-HT), and a dual light scattering detector (PL-LS 15/90 light scattering 20 detector) with a 15° and 90° angle was used. 3x Olexis and 1x Olexis Guard columns from Agilent as stationary phase and 1,2,4-trichlorobenzene (TCB, stabilized with 250 mg/L 2,6-Di tert butyl-4-methyl-phenol) as mobile phase at 160°C and at a constant flow rate of 1 mL/min was applied. 200 $\mu$L of sample solution were injected per analysis. All samples were prepared by dissolving 8.0 - 12.0 mg of polymer in 10 mL (at 160°C) of stabilized TCB (same as mobile phase) for 2.5 hours for PP or 3 hours for PE at 160°C under continuous gentle shaking. The injected concentration of the polymer solution at 160° C (c160° C) was determined in the following way:

$$c_{160°C} = \frac{w_{25}}{V_{25}} * 0,8772$$

With: w25 (polymer weight) and V25 (Volume of TCB at 25°C).
The corresponding detector constants as well as the inter detector delay volumes were determined with a narrow PS standard (MWD = 1.01) with a molar mass of 132900 g/mol and a viscosity of 0.4789 dl/g. The corresponding dn/dc for the used PS standard in TCB is 0.053 $cm^3/g$. The calculation was performed using the Cirrus Multi-Offline SEC-Software Version 3.2 (Agilent).
The molar mass at each elution slice was calculated by using the 15° light scattering angle. Data collection, data processing and calculation were performed using the Cirrus Multi SEC-Software Version 3.2. The molecular weight was calculated using the option in the Cirrus software "use LS 15 angle" in the field *"sample calculation options* subfield *slice MW data from"*. The dn/dc used for the determination of molecular weight was calculated from the detector constant of the RI detector, the concentration c of the sample and the area of the detector response of the analysed sample.
This molecular weight at each slice is calculated in the manner as it is described by C. Jackson and H. G. Barth(C. Jackson and H. G. Barth, " Molecular Weight Sensitive Detectors" in: Handbook of Size Exclusion Chromatography and related techniques, C.-S. Wu, 2nd ed., Marcel Dekker, New York, 2004, p.103) at low angle. For the low and high molecular region in which less signal of the LS detector or RI detector respectively was achieved a linear fit was used to correlate the elution volume to the corresponding molecular weight. Depending on the sample the region of the linear fit was adjusted.
Molecular weight averages (Mz, Mw and Mn), Molecular weight distribution (MWD) and its broadness, described by polydispersity index, PDI= Mw/Mn (wherein Mn is the number average molecular weight and Mw is the weight average molecular weight) were determined by Gel Permeation Chromatography (GPC) according to ISO 16014-4:2003 and ASTM D 6474-99 using the following formulas:

$$M_n = \frac{\sum_{i=1}^{N} A_i}{\sum (A_i/M_i)} \quad (1)$$

$$M_w = \frac{\sum_{i=1}^{N}(A_i \times M_i)}{\sum A_i} \ (2)$$

$$M_z = \frac{\sum_{i=1}^{N}(A_i \times M_i^2)}{\sum (A_i/M_i)} \ (3)$$

For a constant elution volume interval $\Delta V_i$, where $A_i$ and $M_i$ are the chromatographic peak slice area and polyolefin molecular weight (MW) determined by GPC-LS.

**Comonomer contents:**

**Quantification of microstructure by NMR spectroscopy**

Quantitative nuclear-magnetic resonance (NMR) spectroscopy was used to quantify the comonomer content of the polymers.

Quantitative $^{13}C\{^1H\}$ NMR spectra recorded in the molten-state using a Bruker Advance III 500 NMR spectrometer operating at 500.13 and 125.76 MHz for $^1H$ and $^{13}C$ respectively. All spectra were recorded using a $^{13}C$ optimised 7 mm magic-angle spinning (MAS) probehead at 150°C using nitrogen gas for all pneumatics.

Approximately 200 mg of material was packed into a 7 mm outer diameter zirconia MAS rotor and spun at 4 kHz. This setup was chosen primarily for the high sensitivity needed for rapid identification and accurate quantification.{klimke06, parkinson07, castignolles09} Standard single-pulse excitation was employed utilising the NOE at short recycle delays{pollard04, klimke06} and the RS-HEPT decoupling scheme{fillip05, griffin07}. A total of 1024 (1k) transients were acquired per spectra.

Quantitative $^{13}C\{^1H\}$ NMR spectra were processed, integrated and relevant quantitative properties determined from the integrals. All chemical shifts are internally referenced to the bulk methylene signal ($\delta$+) at 30.00 ppm.

The amount of ethylene was quantified using the integral of the methylene ($\delta$+) sites at 30.00 ppm accounting for the number of reporting sites per monomer:

$$E = I_{\delta_+} / 2$$

the presence of isolated comonomer units is corrected for based on the number of isolated comonomer units present:

$$E_{total} = E + (3*B + 2*H) / 2$$

where B and H are defined for their respective comonomers. Correction for consecutive and non-consecutive commoner incorporation, when present, is undertaken in a similar way. Characteristic signals corresponding to the incorporation of 1-butene were observed and the comonomer fraction calculated as the fraction of 1-butene in the polymer with respect to all monomer in the polymer:

$$fB_{total} = ( B_{total} / ( E_{total} + B_{total} + H_{total} )$$

The amount isolated 1-butene incorporated in EEBEE sequences was quantified using the integral of the *B2 sites at 38.3 ppm accounting for the number of reporting sites per comonomer:

$$B = I_{*B2}$$

The amount consecutively incorporated 1-butene in EEBBEE sequences was quantified using the integral of the $\alpha\alpha$B2B2 site at 39.4 ppm accounting for the number of reporting sites per comonomer:

$$BB = 2 * I\alpha\alpha B2B2$$

The amount non consecutively incorporated 1-butene in EEBEBEE sequences was quantified using the integral of the $\beta\beta$B2B2 site at 24.7 ppm accounting for the number of reporting sites per comonomer:

$$BEB = 2 * I\beta\beta2B2$$

Due to the overlap of the *B2 and *$\beta$B2B2 sites of isolated (EEBEE) and non-consecutively incorporated (EEBEBEE) 1-butene respectively the total amount of isolated 1-butene incorporation is corrected based on the amount of non-consecutive 1-butene present:

$$B = I_{*B2} - 2 * I\beta\beta_{B2B2}$$

The total 1-butene content was calculated based on the sum of isolated, consecutive and non-consecutively incorporated 1-butene:

$$Btotal = B + BB + BEB$$

The total mole fraction of 1-butene in the polymer was then calculated as:

$$fB = ( Btotal / ( Etotal + Btotal + Htotal )$$

The amount consecutively incorporated 1-hexene in EEHHEE sequences was quantified using the integral of the $\alpha\alpha$B4B4 site at 40.5 ppm accounting for the number of reporting sites per comonomer:

$$HH = 2 * I\alpha\alpha B4B4$$

The amount non consecutively incorporated 1-hexene in EEHEHEE sequences was quantified using the integral of the $\beta\beta$B4B4 site at 24.7 ppm accounting for the number of reporting sites per comonomer:

$$HEH = 2 * I\beta\beta B4B4$$

The total mole fraction of 1-hexene in the polymer was then calculated as:

$$fH = ( Htotal / ( Etotal + Btotal + Htotal )$$

The mole percent comonomer incorporation is calculated from the mole fraction:

$$B [mol\%] = 100 * fB$$

$$H [mol\%] = 100 * fH$$

The weight percent comonomer incorporation is calculated from the mole fraction:

$$B [wt\%] = 100 * ( fB * 56.11) / ( (fB * 56.11) + (fH * 84.16) + ((1-(fB + fH)) * 28.05) )$$

$$H [wt\%] = 100 * ( fH * 84.16 ) / ( (fB * 56.11) + (fH * 84.16) + ((1-(fB + fH)) * 28.05) )$$

References:

klimke06
Klimke, K., Parkinson, M., Piel, C., Kaminsky, W., Spiess, H.W., Wilhelm, M., Macromol. Chem. Phys. 2006; 207:382.
parkinson07
Parkinson, M., Klimke, K., Spiess, H.W., Wilhelm, M., Macromol. Chem. Phys. 2007; 208:2128.
pollard04
Pollard, M., Klimke, K., Graf, R., Spiess, H.W., Wilhelm, M., Sperber, O., Piel, C., Kaminsky, W., Macromolecules 2004;37:813.
filip05
Filip, X., Tripon, C., Filip, C., J. Mag. Resn. 2005, 176, 239
griffin07
Griffin, J.M., Tripon, C., Samoson, A., Filip, C., and Brown, S.P., Mag. Res. in Chem. 2007 45, S1, S198
castignolles09
Castignolles, P., Graf, R., Parkinson, M., Wilhelm, M., Gaborieau, M., Polymer 50 (2009) 2373
busico01
Busico, V., Cipullo, R., Prog. Polym. Sci. 26 (2001) 443
busico97
Busico, V., Cipullo, R., Monaco, G., Vacatello, M., Segre, A.L., Macromoleucles 30 (1997) 6251
zhou07
Zhou, Z., Kuemmerle, R., Qiu, X., Redwine, D., Cong, R., Taha, A., Baugh, D. Winniford, B., J. Mag. Reson. 187 (2007) 225
busico07
Busico, V., Carbonniere, P., Cipullo, R., Pellecchia, R., Severn, J., Talarico, G., Macromol. Rapid Commun. 2007, 28, 1128
resconi00
Resconi, L., Cavallo, L., Fait, A., Piemontesi, F., Chem. Rev. 2000, 100, 1253

## Determination of unsaturation level Rv

### *Quantification of microstructure by NMR spectroscopy*

Quantitative nuclear-magnetic resonance (NMR) spectroscopy was used to quantify the content of unsaturated groups present in the polymers.

Quantitative $^1$H NMR spectra recorded in the solution-state using a Bruker Advance III 400 NMR spectrometer operating at 400.15 MHz. All spectra were recorded using a $^{13}$C optimised 10 mm selective excitation probehead at 125°C using nitrogen gas for all pneumatics. Approximately 250 mg of material was dissolved in *1,2-tetrachloroethane-$d_2$* (TCE-$d_2$) using approximately 3 mg of Hostanox 03 (CAS 32509-66-3) as stabiliser. Standard single-pulse excitation was employed utilising a 30 degree pulse, a relaxation delay of 10 s and 10 Hz sample rotation. A total of 128 transients were acquired per spectra using 4 dummy scans. This setup was chosen primarily for the high resolution needed for unsaturation quantification and stability of the vinylidene groups.{he10a, busico05a} All chemical shifts were indirectly referenced to TMS at 0.00 ppm using the signal resulting from the residual protonated solvent at 5.95 ppm.

Characteristic signals corresponding to the presence of terminal aliphatic vinyl groups ($R\text{-}CH=CH_2$) were observed and the amount quantified using the integral of the two coupled inequivalent terminal $CH_2$ protons (Va and Vb) at 4.95, 4.98 and 5.00 and 5.05 ppm accounting for the number of reporting sites per functional group:

$$Nvinyl = IVab\ /\ 2$$

Characteristic signals corresponding to the presence of internal vinylidene groups ($RR'C=CH_2$) were observed and the amount quantified using the integral of the two $CH_2$ protons (D) at 4.74 ppm accounting for the number of reporting sites per functional group:

$$Nvinylidene = ID\ /\ 2$$

When characteristic signals corresponding to the presence of internal cis-vinylene groups (E-RCH=CHR'), or related structure, were observed, then the amount quantified using the integral of the two CH protons (C) at 5.39 ppm accounting for the number of reporting sites per functional group:

$$Ncis = IC / 2$$

When characteristic signals corresponding to the presence of internal cis-vinylene groups (E-RCH=CHR'), or related structure, were not visually observed, then these groups were not counted and the parameter Ncis was not used.

Characteristic signals corresponding to the presence of internal trans-vinylene groups (Z-RCH=CHR') were observed and the amount quantified using the integral of the two CH protons (T) at 5.45 ppm accounting for the number of reporting sites per functional group:

$$Ntrans = IT / 2$$

Characteristic signals corresponding to the presence of internal trisubstituted-vinylene groups (RCH=CR'R"), or related structure, were observed and the amount quantified using the integral of the CH proton (Tris) at 5.14 ppm accounting for the number of reporting sites per functional group:

$$Ntris = ITris$$

The Hostanox 03 stabliser was quantified using the integral of multiplet from the aromatic protons (A) at 6.92, 6.91, 6.69 and at 6.89 ppm and accounting for the number of reporting sites per molecule:

$$H = IA / 4$$

As is typical for unsaturation quantification in polyolefins the amount of unsaturation was determined with respect to total carbon atoms, even though quantified by $^1$H NMR spectroscopy. This allows direct comparison to other microstructure quantities derived directly from $^{13}$C NMR spectroscopy.

The total amount of carbon atoms was calculated from integral of the bulk aliphatic signal between 2.85 and -1.00 ppm with compensation for the methyl signals from the stabiliser and carbon atoms relating to unsaturated functionality not included by this region:

$$NCtotal = (Ibulk - 42*H) / 2 + 2*Nvinyl + 2*Nvinylidene + 2*Ncis + 2*Ntrans + 2*Ntris$$

The content of unsaturated groups (U) was calculated as the number of unsaturated groups in the polymer per thousand total carbons (kCHn):

$$U = 1000*N / NCtotal$$

The total amount of unsaturated group was calculated as the sum of the individual observed unsaturated groups and thus also reported with respect per thousand total carbons:

$$Utotal = Uvinyl + Uvinylidene + Ucis + Utrans + Utris$$

The relative content of a specific unsaturated group (U) is reported as the fraction or percentage of a given unsaturated group with respect to the total amount of unsaturated groups:

$$[U] = Ux / Utotal$$

Rv is then calculated from

$$\frac{[vinyl]}{[vinylidene]+[vinyl]+[cis]+[trans]+[tris]} = \text{Uvinyl/Utotal}$$

References

he10a
He, Y., Qiu, X, and Zhou, Z., Mag. Res. Chem. 2010, 48, 537-542.
busico05a
Busico, V. et. al. Macromolecules, 2005, 38 (16), 6988-6996

## B) Examples

## Preparation of examples

The catalyst used in the Examples IE1 + IE2 was a metallocene catalyst with metallocene complex bis(1-methyl-3-n-butyl cyclopentadienyl)Zr(IV)Cl$_2$ (CAS no. 151840-68-5) supported on Albemarle ActivCat® carrier.

**Polymerization: Example 1: Inventive bimodal terpolymer of ethylene with 1-butene and 1-hexene comonomers**

Polymerization was performed in a Borstar® plant comprising a prepolymerization loop reactor, a loop reactor and a gas phase reactor, whereby the slurry from the prepolymerization reactor was withdrawn intermittently and directed into the loop reactor, subsequently he slurry was withdrawn from the loop reactor intermittently by using settling legs and directed to a flash vessel operated at a temperature of 50°C and a pressure of 3 bar and from there the polymer was directed to the gas phase reactor (GPR)

The polymerization conditions can be seen in Table 1:

**Table 1: polymerization conditions for IE1**

|  | Unit | IE1 |
|---|---|---|
| Prepolymerization |  |  |
| Temperature | [°C] | 50 |
| Pressure | [kPa] | 5255 |
| Catalyst feed | [g/h] | 28 |
| C$_2$ feed | [kg/h] | 2.0 |
| H$_2$ feed | [g/h] | 0.1 |
| C$_4$ feed | [kg/h] | 57.6 |
| C$_3$ feed | [kg/h] | 57 |
| Antistatica Statesafe | [ppm] | 9.8 |
| Loop reactor |  |  |
| Temperature | [°C] | 85 |
| Pressure | [kPa] | 5217 |
| C$_2$ concentration | [mol%] | 3.8 |
| H$_2$/C$_2$ ratio | [mol/kmol] | 0.2 |
| C$_4$/C$_2$ ratio | [mol/kmol] | 206 |
| Loop density | [kg/m$^3$] | 940 |
| Loop MFR$_2$ | [g/10min] | 60 |

(continued)

| GPR | | |
|---|---|---|
| Temperature | [°C] | 75 |
| Pressure | [kPa] | 2000 |
| Ethylene concentration | [mol%] | 39.7 |
| $H_2/C_2$ ratio | [mol/kmol] | 0.2 |
| $C_6/C_2$ ratio | [mol/kmol] | 41.7 |

The production split (%Loop/%GPR components) was 44/56. The amount of the prepolymerization product was calculated to the amount of the Loop product.

The polymer was mixed with 0.2 wt% Irganox B561. Then it was compounded and extruded under nitrogen atmosphere to pellets by using a CIMP90 extruder so that the SEI was 230 kWh/kg and the melt temperature 250°C

**Table 2: Properties of the final polymer composition:**

| | Unit | IE1 |
|---|---|---|
| $MFR_2$ | [g/10min] | 3.2 |
| density | [kg/m$^3$] | 916 |
| Comonomer content $C_4$ | [mol%] | 0.5 |
| Comonomer content $C_6$ | [mol%] | 3.2 |
| MWD (Mw/Mn] | - | 4.6 |
| Vinyl/1000C | | 0.04 |
| Vinylidene/1000C | | 0.02 |
| Cis vinylene/1000C | | 0.00 |
| Trans vinylene/1000C | | 0.01 |
| Tris vinylene/1000C | | 0.07 |
| Rv | | 0.29 |

CE1: Comparable commercially available grade Exceed 3518CB from Exxon, being a $C_6$- mLLDPE (linear low density polyethylene $C_2/C_6$ copolymer produced with a metallocene catalyst) with a density of 918 kg/m$^3$, an $MFR_2$ of 3.5 g/10min and an MWD of 3.2

Table 3: Unsaturation level of CE1

| Vinyl/1000C | Vinylidene /1000C | Cis vinylene/1000C | Trans vinylene/1000C | Tris vinylene/1000C | Rv |
|---|---|---|---|---|---|
| 0.05 | 0.02 | 0.00 | 0.01 | 0.04 | 0.42 |

**Claims**

1.  Bi- or multimodal polyethylene being a terpolymer of ethylene and two different comonomers selected from alpha olefins having from 4 to 10 carbon atoms and being produced with a metallocene catalyst, wherein the bi- or multimodal polyethylene terpolymer has

    (a) an $MFR_2$ of 2.0-5.0 g/10 min (according to ISO 1133 at 190°C under 2.16 kg load),
    (b) an MWD (Mw/Mn) of 5 or less
    (c) a density of 915 to 930 kg/m$^3$ (according to ISO 1183)
    (d) an unsaturation level Rv of below 0.40 and being defined as

$$Rv = \frac{[\text{vinyl}]}{[\text{vinylidene}]+[vinyl]+[cis]+[trans]+[tris]}$$

wherein [vinyl] is the concentration of vinyl groups in the isolated polymer in vinyl/1000 carbon atoms; [vinylidene], [cis], [trans] and [tris] are the concentration of vinylidene, cis and trans vinylene groups and of tri-substituted vinylene groups in the isolated polymer in amount per 1000 carbon atoms, respectively, as detected by the method described in the experimental part,
and wherein the bi- or multimodal polyethylene terpolymer comprises at least

   (i) an ethylene polymer component (A) having an $MFR_2$ of at least 50 g/10 min up to 100 g/10 min (according to ISO 1133 at 190°C under 2.16 kg load) and
   (ii) an ethylene polymer component (B) having an $MFR_2$ of 0.5 to 10.0 g/10 min (according to ISO 1133 at 190°C under 2.16 kg load).

2. Bi- or multimodal polyethylene terpolymer according to claim 1, wherein the two alpha-olefin comonomers having from 4 to 10 carbon atoms are 1-butene and 1-hexene.

3. Bi- or multimodal polyethylene terpolymer according to claim 1 or 2, wherein the terpolymer is bi- or multimodal with respect to comonomer type and/or comonomer content (mol%) and wherein the alpha-olefin comonomer having from 4 to 10 carbon atoms of ethylene polymer component (A) is different from the alpha-olefin comonomer having from 4 to 10 carbon atoms of ethylene polymer component (B).

4. Bi- or multimodal polyethylene terpolymer according to claim 3, wherein the ethylene polymer component (A) has lower amount (mol%) of comonomer than the ethylene polymer component (B), thus the amount of comonomer in the ethylene polymer component (A) is from 0.1 to 2.5 mol%.

5. Bi- or multimodal polyethylene terpolymer according to claim 3 or 4, wherein the alpha-olefin comonomer having from 4 to 10 carbon atoms of ethylene polymer component (A) is 1-butene and the alpha-olefin comonomer having from 4 to 10 carbon atoms of ethylene polymer component (B) is 1-hexene.

6. Bi-or multimodal polyethylene terpolymer according to any of the preceding claims, wherein the terpolymer is further bi- or multimodal with respect to a difference in density between the ethylene polymer component (A) and ethylene polymer component (B), whereby the density of ethylene polymer component (A) is higher than the density of the ethylene polymer component (B); the density of the ethylene polymer component (A) being in the range of 930 to 950 kg/m$^3$.

7. Polymer composition comprising the bi-or multimodal polyethylene terpolymer according to any of the preceding claims 1 to 6 and optional further polymer components, additives and/or fillers.

8. Use of a bi-or multimodal polyethylene terpolymer according to any of the preceding claims 1 to 6 or a polymer composition according to claim 7 in cast film applications.

9. Cast film comprising a bi-or multimodal polyethylene terpolymer according to any of the preceding claims 1 to 6 or a polymer composition according to claim 7.


**Patentansprüche**

1. Bi- oder multimodales Polyethylen, das ein Terpolymer aus Ethylen und zwei verschiedenen Comonomeren ist, die ausgewählt sind aus Alpha-Olefinen, die 4 bis 10 Kohlenstoffatome aufweisen, und das mit einem Metallocenkatalysator hergestellt ist,
wobei das bi- oder multimodale Polyethylenterpolymer aufweist

   (a) eine $MFR_2$ von 2,0-5,0 g/10 min (nach ISO 1133 bei 190 °C unter einer Last von 2,16 kg),
   (b) eine MWD (Mw/Mn) von 5 oder weniger,
   (c) eine Dichte von 915 bis 930 kg/m$^3$ (nach ISO 1183),
   (d) einen Ungesättigtheitsgrad Rv von unter 0,40 und der definiert als

$$Rv= \frac{[Vinyl]}{[Vinyliden] + [Vinyl] + [cis] + [trans] + [tris]}$$

wobei [Vinyl] die Konzentration von Vinylgruppen in dem isolierten Polymer in Vinyl/1000 Kohlenstoffatome ist; [Vinyliden], [cis], [trans] und [tris] jeweils die Konzentrationen von Vinyliden-, cis- und trans-Vinylengruppen und von trisubstituierten Vinylengruppen in dem isolierten Polymer in Menge pro 1000 Kohlenstoffatome sind, wie durch das im experimentellen Teil beschriebene Verfahren erfasst,
und wobei das bi- oder multimodale Polyethylenterpolymer mindestens umfasst

(i) eine Ethylenpolymer-Komponente (A), die eine $MFR_2$ von mindestens 50 g/10 min bis zu 100 g/10 min (nach ISO 1133 bei 190 °C unter einer Last von 2,16 kg) aufweist, und
(ii) eine Ethylenpolymer-Komponente (B), die ein $MFR_2$ von 0,5 bis 10,0 g/10 min (nach ISO 1133 bei 190 °C unter einer Last von 2,16 kg) aufweist.

2. Bi- oder multimodales Polyethylenterpolymer nach Anspruch 1, wobei die beiden Alpha-Olefin-Comonomere, die 4 bis 10 Kohlenstoffatome aufweisen 1-Buten und 1-Hexen sind.

3. Bi- oder multimodales Polyethylenterpolymer nach Anspruch 1 oder 2, wobei das Terpolymer hinsichtlich Comonomerart und/oder Comonomergehalt (Mol-%) bi- oder multimodal ist und wobei das Alpha-Olefin-Comonomer, das 4 bis 10 Kohlenstoffatome von Ethylenpolymer-Komponente (A) aufweist, sich von dem Alpha-Olefin-Comonomer unterscheidet, das 4 bis 10 Kohlenstoffatome von Ethylenpolymer-Komponente (B) aufweist.

4. Bi- oder multimodales Polyethylenterpolymer nach Anspruch 3, wobei die Ethylenpolymer-Komponente (A) eine geringere Menge (Mol-%) an Comonomer aufweist als die Ethylenpolymer-Komponente (B), womit die Menge an Comonomer in der Ethylenpolymer-Komponente (A) 0,1 bis 2,5 Mol-% beträgt.

5. Bi- oder multimodales Polyethylenterpolymer nach Anspruch 3 oder 4, wobei das Alpha-Olefin-Comonomer, das 4 bis 10 Kohlenstoffatome der Ethylenpolymer-Komponente (A) aufweist, 1-Buten ist und das Alpha-Olefin-Comonomer, das 4 bis 10 Kohlenstoffatome der Ethylenpolymer-Komponente aufweist, (B) 1-Hexen ist.

6. Bi-oder multimodales Polyethylenterpolymer nach einem der vorstehenden Ansprüche, wobei das Terpolymer weiter hinsichtlich eines Dichteunterschiedes zwischen der Ethylenpolymer-Komponente (A) und der Ethylenpolymer-Komponente (B) bi- oder multimodal ist, wonach die Dichte der Ethylenpolymer-Komponente (A) höher ist als die Dichte der Ethylenpolymer-Komponente (B); wobei die Dichte der Ethylenpolymer-Komponente (A) im Bereich von 930 bis 950 kg/m$^3$ liegt.

7. Polymerzusammensetzung, umfassend das bi- oder multimodale Polyethylenterpolymer nach einem der vorstehenden Ansprüche 1 bis 6 und optionale weitere Polymerkomponenten, Zusatzstoffe und/oder Füllstoffe.

8. Verwendung eines bi- oder multimodalen Polyethylenterpolymers nach einem der vorstehenden Ansprüche 1 bis 6 oder einer Polymerzusammensetzung nach Anspruch 7 in Gießfolienanwendungen.

9. Gießfolie, umfassend ein bi- oder multimodales Polyethylenterpolymer nach einem der vorhstehenden Ansprüche 1 bis 6 oder eine Polymerzusammensetzung nach Anspruch 7.


**Revendications**

1. Polyéthylène bi- ou multimodal étant un terpolymère d'éthylène et de deux comonomères différents sélectionnés à partir d'alpha-oléfines ayant de 4 à 10 atomes de carbone et étant produit avec un catalyseur métallocène, dans lequel le terpolymère de polyéthylène bi- ou multimodal a

(a) un $MFR_2$ de 2,0 à 5,0 g/10 min (selon ISO 1133 à 190 °C sous une charge de 2,16 kg),
(b) une MWD (Mw/Mn) de 5 ou moins
(c) une masse volumique de 915 à 930 kg/m$^3$ (selon ISO 1183)
(d) un niveau d'insaturation Rv inférieur à 0,40 et étant défini en tant que

$$Rv = \frac{[vinyle]}{[vinylidène] + [vinyle] + [cis] + [trans] + [tris]}$$

dans lequel [vinyle] est la concentration en groupes vinyle dans le polymère isolé en vinyle/1000 atomes de carbone; [vinylidène], [cis], [trans] et [tris] sont la concentration en vinylidène, en groupes vinylène cis et trans et en groupes vinylène tri- substitués dans le polymère isolé en quantité par 1000 atomes de carbone, respectivement, telle que détectée par le procédé décrit dans la partie expérimentale,
et dans lequel le terpolymère de polyéthylène bi- ou multimodal comprend au moins

(i) un composant polymère d'éthylène (A) ayant un $MFR_2$ d'au moins 50 g/10 min jusqu'à 100 g/10 min (selon ISO 1133 à 190 °C sous une charge de 2,16 kg) et
(ii) un composant polymère d'éthylène (B) ayant un $MFR_2$ de 0,5 à 10,0 g/10 min (selon ISO 1133 à 190 °C sous une charge de 2,16 kg).

2. Terpolymère de polyéthylène bi- ou multimodal selon la revendication 1, dans lequel les deux comonomères d'alpha-oléfine ayant de 4 à 10 atomes de carbone sont 1-butène et 1-hexène.

3. Terpolymère de polyéthylène bi- ou multimodal selon la revendication 1 ou 2, dans lequel le terpolymère est bi- ou multimodal par rapport au type de comonomère et/ou à la teneur en comonomère (% molaire) et dans lequel le comonomère d'alpha-oléfine ayant de 4 à 10 atomes de carbone du composant polymère d'éthylène (A) est différent du comonomère d'alpha-oléfine ayant de 4 à 10 atomes de carbone du composant polymère d'éthylène (B).

4. Terpolymère de polyéthylène bi- ou multimodal selon la revendication 3, dans lequel le composant polymère d'éthylène (A) a une quantité plus basse (% molaire) de comonomère que le composant polymère d'éthylène (B), donc la quantité de comonomère dans le composant polymère d'éthylène (A) va de 0,1 à 2,5 % molaires.

5. Terpolymère de polyéthylène bi- ou multimodal selon la revendication 3 ou 4, dans lequel le comonomère d'alpha-oléfine ayant de 4 à 10 atomes de carbone du composant polymère d'éthylène (A) est 1-butène et le comonomère d'alpha-oléfine ayant de 4 à 10 atomes de carbone du composant polymère d'éthylène (B) est 1-hexène.

6. Terpolymère de polyéthylène bi- ou multimodal selon l'une quelconque des revendications précédentes, dans lequel le terpolymère est en outre bi- ou multimodal par rapport à une différence de masse volumique entre le composant polymère d'éthylène (A) et le composant polymère d'éthylène (B), moyennant quoi la masse volumique du composant polymère d'éthylène (A) est supérieure à la masse volumique du composant polymère d'éthylène (B); la masse volumique du composant polymère d'éthylène (A) étant dans la plage de 930 à 950 kg/m$^3$.

7. Composition polymère comprenant le terpolymère de polyéthylène bi- ou multimodal selon l'une quelconque des revendications 1 à 6 précédentes et d'autres composants polymères, additifs et/ou charges facultatifs.

8. Utilisation d'un terpolymère de polyéthylène bi- ou multimodal selon l'une quelconque des revendications 1 à 6 précédentes ou d'une composition polymère selon la revendication 7 dans des applications de film coulé.

9. Film coulé comprenant un terpolymère de polyéthylène bi- ou multimodal selon l'une quelconque des revendications 1 à 6 précédentes ou une composition polymère selon la revendication 7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1969022 A
- WO 2016083208 A
- WO 2013007619 A
- US 2006177675 A
- WO 9512622 A
- WO 9632423 A
- WO 9728170 A
- WO 9832776 A
- WO 9961489 A
- WO 03010208 A
- WO 03051934 A
- WO 03051514 A
- WO 2004085499 A
- EP 1752462 A
- EP 1739103 A
- WO 9212182 A
- WO 9618662 A
- US 4582816 A
- US 3405109 A
- US 3324093 A

- EP 479186 A
- US 5391654 A
- EP 1310295 A
- EP 1591460 A
- WO 2007025640 A
- US 4543399 A
- EP 699213 A
- WO 9425495 A
- EP 696293 A
- EP 1415999 A
- WO 0026258 A
- EP 887379 A
- EP 887380 A
- EP 887381 A
- EP 991684 A
- WO 0029452 A
- US 4621952 A
- EP 188125 A
- EP 250169 A
- EP 579426 A

**Non-patent literature cited in the description**

- *Hagström, The Polymer Processing Society, Europe/Africa Region Meeting,* 19 August 1997
- *Hagström, The Polymer Processing Society, Europe/Africa Region Meeting, Gothenburg,* 19 August 1997
- Molecular Weight Sensitive Detectors. **C. JACKSON ; H. G. BARTH.** Handbook of Size Exclusion Chromatography and related techniques. Marcel Dekker, 2004, 103
- **KLIMKE, K. ; PARKINSON, M. ; PIEL, C. ; KAMINSKY, W. ; SPIESS, H.W. ; WILHELM, M.** *Macromol. Chem. Phys.,* 2006, vol. 207, 382
- **PARKINSON, M. ; KLIMKE, K. ; SPIESS, H.W. ; WILHELM, M.** *Macromol. Chem. Phys.,* 2007, vol. 208, 2128
- **POLLARD, M. ; KLIMKE, K. ; GRAF, R. ; SPIESS, H.W. ; WILHELM, M. ; SPERBER, O. ; PIEL, C. ; KAMINSKY, W.** *Macromolecules,* 2004, vol. 37, 813
- **FILIP, X. ; TRIPON, C. ; FILIP, C.** *J. Mag. Resn.,* 2005, vol. 176, 239
- **GRIFFIN, J.M. ; TRIPON, C. ; SAMOSON, A. ; FILIP, C. ; BROWN, S.P.** *Mag. Res. in Chem.,* 2007, vol. 45 (S1), S198

- **CASTIGNOLLES, P. ; GRAF, R. ; PARKINSON, M. ; WILHELM, M. ; GABORIEAU, M.** *Polymer,* 2009, vol. 50, 2373
- **BUSICO, V. ; CIPULLO, R.** *Prog. Polym. Sci.,* 2001, vol. 26, 443
- **BUSICO, V. ; CIPULLO, R. ; MONACO, G. ; VACATELLO, M. ; SEGRE, A.L.** *Macromoleucles,* 1997, vol. 30, 6251
- **ZHOU, Z. ; KUEMMERLE, R. ; QIU, X. ; REDWINE, D. ; CONG, R. ; TAHA, A. ; BAUGH, D. ; WINNIFORD, B.** *J. Mag. Reson.,* 2007, vol. 187, 225
- **BUSICO, V. ; CARBONNIERE, P. ; CIPULLO, R. ; PELLECCHIA, R. ; SEVERN, J. ; TALARICO, G.** *Macromol. Rapid Commun.,* 2007, vol. 28, 1128
- **RESCONI, L. ; CAVALLO, L. ; FAIT, A. ; PIEMONTESI, F.** *Chem. Rev.,* 2000, vol. 100, 1253
- *CHEMICAL ABSTRACTS, 32509-66-3*
- **HE, Y. ; QIU, X ; ZHOU, Z.** *Mag. Res. Chem.,* 2010, vol. 48, 537-542
- **BUSICO, V.** *Macromolecules,* 2005, vol. 38 (16), 6988-6996
- *CHEMICAL ABSTRACTS, 151840-68-5*